# EUROPÄISCHE PATENTSCHRIFT

(11) **EP 2 675 655 B1**
(45) Veröffentlichungstag und Bekanntmachung des Hinweises auf die Patenterteilung: **24.05.2017**
(21) Anmeldenummer: 12705054.0
(22) Anmeldetag: 13.02.2012
(51) Int. Cl.: B60N 2/20, B60N 2/36, B60N 2/68, B60N 2/015, B60N 2/30

(54) **DREHGELENK FÜR INSBESONDERE EINEN FAHRZEUGSITZ**
ROTARY JOINT, IN PARTICULAR FOR A VEHICLE SEAT
JOINT ARTICULÉ DESTINÉ EN PARTICULIER À UN SIÈGE DE VÉHICULE

(30) Priorität: 17.02.2011 DE 102011011480
(43) Veröffentlichungstag der Anmeldung: 25.12.2013
(73) Patentinhaber: Johnson Controls GmbH, 51399 Burscheid (DE)
(72) Erfinder: JOSTEN, Stefan, 41569 Rommerskirchen (DE); PASTOREK, Andrej, 95704 Banovce nad Bebravou (SK); NDAGIJIMANA, Benjamin, 50733 Köln (DE)
(74) Vertreter: Siekmann, Gunnar
(86) Internationale Anmeldenummer: PCT/EP2012/000621
(87) Internationale Veröffentlichungsnummer: WO 2012/110220

(56) Entgegenhaltungen:
- WO-A1-2004/024504
- DE-U1- 29 609 018
- FR-A1- 2 897 311
- US-A1- 2009 144 935

## Beschreibung

Die Erfindung bezieht sich auf ein Drehgelenk für ein beweglich gehaltenes Bauteil, insbesondere für ein Sitzkissen eines Fahrzeugrücksitzes, mit zumindest zwei zueinander drehbeweglich gehaltenen Lagerteilen, die einander zugewandte Gleitflächen aufweisen. Des Weiteren betrifft die Erfindung einen Sitz, insbesondere einen Fahrzeugsitz, mit zumindest einem beweglich gehaltenen Sitzabschnitt, wie einem Sitzkissen oder dergleichen, welcher mittels wenigstens einem Drehgelenk schwenkbeweglich gehalten ist.

Es ist zum Beispiel möglich, das Sitzkissen eines Sitzes über wenigstens ein Drehgelenk verstellbeweglich aufzunehmen. Mittels solcher Drehgelenke lassen sich insbesondere die Sitzkissen einer Rücksitzbank eines Kraftfahrzeuges in eine senkrechte Ausrichtung bringen, um den Stauraum bzw. die Verstaumöglichkeiten innerhalb des Fahrzeuges zu vergrößern. Das Sitzkissen ist dazu üblicherweise mit seinem unteren Ende über zumindest ein Drehgelenk mit der Lehne des Sitzes oder an Karosserieteilen eines Fahrzeuges befestigt. Dabei sollen störende Geräusche bzw. Vibrationen in den Drehgelenken vermieden oder gar eine ungewollte Bewegung eines um- bzw. hochgeklappten Sitzkissens verhindert werden.

Nach der DE 102 49 100 A1 ist beispielsweise ein Drehgelenk für einen Fahrzeugsitz bekannt, das mit einer Steuereinrichtung in Wirkverbindung steht, über die ein am Lehnenteil des Fahrzeugsitzes angeordnetes Verriegelungsteil mit einem Gegenlager in lösbaren Eingriff gebracht werden kann, so dass sich das Lehnenteil in seiner waagerechten Ausrichtung fixieren lässt.
Des Weiteren ist in der DE 197 31 305 C2 eine Gelenkverbindung für insbesondere Sitzverstelleinrichtungen beschrieben, die wenigstens eine Buchse und einen mit einem radialen Spiel in der Buchse drehbar aufgenommenen Gelenkbolzen aufweist. Um das Spiel in der Buchse auszugleichen, ist ein axialmontierbares Spielausgleichselement vorgesehen, das ein Übermaß aufweist, so dass bei der Montage der Gelenkverbindung Materialteile des Ausgleichelementes in den Lagerspalt hineingedrückt werden.
Nach der DE 69 11 480 U ist weiterhin ein Drehgelenk bekannt, das mit einer Blockiereinrichtung ausgerüstet ist, die eine Aufnahme mit zwei kegelstumpfförmigen Kränzen entgegengesetzter Steigung und in diesen Kränzen geführten, kegelstumpfförmigen Scheiben aufweist. Durch das Zusammenziehen der Scheiben untereinander ist eine Klemmwirkung zwischen den Scheibenumfängen und den Kränzen der Aufnahme erzielt, wodurch die feste Ausrichtung der Rückenlehne eines Fahrzeugsitzes bewirkt ist.

Die bekannten Drehgelenke weisen zum einen eine relativ aufwendige konstruktive Ausgestaltung auf und zum anderen werden die nach der DE 197 31 305 C2 bekannten Spielausgleichselemente im Bereich der Sitzverstellung derart stark belastet, dass eine zuverlässige Langzeitfunktion nicht gewährleistet ist.

Aus der gattungsbildenden US 2009/0144935 ist eine Drehgelenkanordnung bekannt, bei der mittels einer Spiralfeder die Drehbewegung einer gelagerten Achse freigegeben oder gesperrt werden kann.

DE 29609018 U1 offenbart eine Universalverbindung, bei der die Anpresskraft zwischen der Gleitfläche einer einzigen Lagerschale und der Gleitfläche eines darin gelagerten Lagerteiles mittels einer Schnellklemmvorrichtung bereitgestellt werden kann.

Der Erfindung liegt die Aufgabe zugrunde, ein Drehgelenk der vorbezeichneten Gattung dahingehend zu verbessern, dass mögliche Geräusche oder Vibrationen im Drehgelenk auf vorteilhaft einfache Weise vermieden sind.

Die Lösung der Aufgabe erfolgt erfindungsgemäß durch ein Drehgelenk mit den Merkmalen des Patentanspruches 1. Vorteilhafte Weiterbildungen und Ausgestaltungen der Erfindung sind in den Ansprüchen 2 bis 10 angegeben.

Bei einem Drehgelenk für ein beweglich gehaltenes Bauteil, insbesondere für ein Sitzkissen eines Fahrzeugrücksitzes, mit zumindest zwei zueinander drehbeweglich gehaltenen Lagerteilen, die einander zugewandte Gleitflächen aufweisen, ist nach der Erfindung vorgesehen, dass ein erstes Lagerteil wenigstens zwei zueinander im Abstand veränderliche Lagerschalen aufweist, mittels denen das zweite Lagerteil wenigstens teilweise an seinem Umfang umschlossen ist, und dass wenigstens einem der Lagerteile zumindest ein Mittel zur Erhöhung der Anpresskraft zwischen den Gleitflächen der Lagerschalen und den Gleitflächen des zweiten Lagerteiles zugeordnet ist.

Mit Hilfe eines derartig erfindungsgemäß ausgebildeten Drehgelenks lassen sich durch die bevorzugt spalt- und somit spielfreie Verbindung zwischen zumindest Flächenabschnitten der Gleitflächen auf vorteilhafte Weise mögliche Bewegungen und daraus resultierende Geräusche minimieren. Auch ungewollte bzw. selbsttätige Verdrehbewegungen der Lagerteile zueinander können damit zuverlässig vermieden werden, da durch den erzeugten Reibschluss zwischen den Gleitflächen eine Art Arretierung der Lagerteile zueinander gewährleistet ist. Das zweite, insbesondere drehbewegliche Lagerteil wird zwischen den zueinander im Abstand veränderlich ausgebildeten Lagerschalen des ersten, feststehenden Lager-teils vorzugsweise geklemmt. Als Mittel zur Erhöhung der Anpresskraft zwischen den Gleitflächen der Lagerteile dient zum Beispiel eine Schraubverbindung, mittels der die Lagerschalen des ersten Lagerteiles auf einer Seite zusammengezogen werden. Die Lagerschalen des ersten Lagerteiles sind dabei auf der gegenüberliegenden Seite bevorzugt scharnierartig entlang einer Schwenk- bzw. Klappebene zueinander gehalten.

Nach einer vorteilhaften Weiterbildung der Erfindung ist vorgesehen, dass wenigstens Flächenteile einer der Gleitflächen des ersten oder zweiten Lagerteils aus einem separaten Hülsenteil mit auf die Abmessungen der Lagerteile abgestimmten Innen- und Außendurchmesser ausgebildet ist. Mittels des Hülsen-teiles, welches zum Beispiel als Hohlzylinder mit einer gitterartigen Struktur ausgebildet sein kann, lässt sich zwischen den beiden zueinander drehbeweglich gehaltenen Lagerteilen nahezu über ihre gesamten äußeren und inneren Gleitflächen mit Vorteil eine Spaltfreiheit herstellen. Damit ist ebenfalls die Klemmwirkung vorteilhaft über den gesamten Umfang des erfindungsgemäßen Drehgelenkes verteilt, wodurch zusätzlich der Reibschluss zwischen den Gleitflächen der Lagerteile verbessert ist. Das zweite Lagerteil bewegt sich innerhalb des ersten Lagerteiles nur nach Überwindung eines gegebenenfalls voreinstellbaren Reibwiderstandes. Um eine optimale Spaltfreiheit zwischen den Gleitflächen des ersten und zweiten Lagerteiles gewährleisten zu können, ist das Hülsenteil mit seinem Innen- und Außendurchmesser optimal auf die Abmessungen der Lagerteile abgestimmt. Des Weiteren weist das Hülsenteil einen entsprechend vorteilhaften Reibkoeffizienten auf.

Bevorzugt ist das Hülsenteil aus zwei vorgeformten Hülsenhälften ausgebildet, was eine vorteilhafte Möglichkeit der konstruktiven Ausgestaltung des Hülsenteiles darstellt. Insbesondere bei einem Hülsenteil aus nicht verformbarem Material können durch die Zweiteilung des Hülsenteiles dessen Hülsenhälften relativ einfach um die äußere Mantelfläche des zweiten, inneren Lagerteiles herumgelegt werden. Die Hülsenhälften, welche bevorzugt vollflächig ausgebildet sind, lassen sich dann zusammen mit dem zweiten Lagerteil zwischen den zumindest aufklappbaren Lagerschalen des ersten Lagerteiles anordnen. Um eine drehfeste Verbindung zwischen beispielsweise der äußeren Mantelfläche des Hülsenteiles und der inneren Mantelfläche des ersten Lagerteiles herzustellen und somit nur eine Drehung zwischen dem Hülsenteil und dem zweiten, inneren Lagerteil sicherzustellen, kann es vorgesehen sein, dass an der äußeren Mantelfläche des Hülsenteiles pinartige Vorsprünge ausgebildet sind, die entsprechend formschlüssig in dafür vorgesehene Ausnehmungen an den inneren Mantelflächen der Lagerschalen eingreifen.

Die Hülsenhälften sind insbesondere über einen scharnierartigen Verbindungsbereich miteinander verbunden, mittels dem eine vorteilhafte Ausrichtung der Hülsenhälften zueinander gewährleistet ist. Speziell das Anordnen des Hülsenteiles um die äußere Mantelfläche des ersten Lagerteiles sowie das Einsetzen des Hülsenteiles zusammen mit dem zweiten Lagerteil zwischen die Lagerschalen des ersten Lagerteiles ist damit auf einfache Weise möglich. Vorzugsweise ist der scharnierartige Verbindungsbereich als Filmscharnier ausgebildet, was eine konstruktiv einfache Möglichkeit zur Ausgestaltung eines Scharniers darstellt. Über das Filmscharnier ist eine vorteilhafte Einteiligkeit des Hülsenteiles hergestellt, da die beiden, dennoch klappbar zueinander aus-gebildeten Hülsenhälften über einen relativ dünnwandigen Verbindungsbereich aus demselben Material untereinander verbunden sind. Auf der dem scharnierartigen Verbindungsbereich abgewandten Seite weist jede Hülsenhälfte bevorzugt einen einteilig mit der Hülsenhälfte ausgebildeten, etwa radial abstehenden Halteschenkel auf. Die Halteschenkel sind in Montagestellung des Hülsenteiles parallel aufeinanderliegend angeordnet und werden zum Arretieren des Hülsenteiles zwischen vorbestimmten Bereichen der Lagerschalen fixiert.

Der Werkstoff für das Hülsenteil ist insbesondere aus einem elastische Eigenschaften aufweisenden Material ausgebildet, wodurch zum einen die Herstellung des Hülsenteiles auf vorteilhafte Weise vereinfacht ist. Zum anderen ist mit dem Einsatz eines elastischen Materials die Möglichkeit gegeben, das Hülsenteil mit einem gewissen Übermaß auszubilden. Das Hülsenteil weist diesbezüglich eine Wandstärke auf, die größer als das vorliegende Spaltmaß zwischen den eigentlichen Gleitflächen des ersten und zweiten Lagerteiles ist, so dass das Hülsenteil bei der Montage elastisch zusammengedrückt wird. Zur Ausbildung des Hülsenteiles kann insbesondere als Material Kunststoff zur Anwendung kommen, welcher sich beispielsweise mit Hilfe des Prozesses des Spritzgießens relativ einfach in die entsprechende Form bringen lässt. Der Einsatz anderer Materialien, wie zum Beispiel Kautschuk, ist ebenfalls denkbar.

Alternativ oder optional kann nach einer Weiterbildung der Erfindung vorgesehen sein, dass an einer der Gleitflächen des ersten oder zweiten Lagerteils ein Hemmteil vorstehend ausgebildet ist, welches in Anlage mit Flächenbereichen der Gleitfläche des jeweils anderen Lagerteiles steht. Mit Hilfe des verformbaren Hemmteiles kann entweder zusätzlich zu dem Hülsenteil oder auch alternativ zum Hülsenteil eine Anpresskraft zwischen vorbestimmten Flächenabschnitten der Gleitflächen des ersten und zweiten Lagerteiles erzeugt werden. Das Hemmteil erstreckt sich in diesem Zusammenhang insbesondere nur über einen vorbestimmten Abschnitt der Gleitfläche eines jeweiligen Lagerteiles. Durch das erfindungsgemäß ausgebildete Hemmteil lässt sich speziell in Verbindung mit einem bereits zur Anwendung kommenden Hülsenteil der Anpressdruck auf Abschnitte der Gleitflächen weiter erhöhen. In diesem Zusammenhang kann es notwendig sein, dass das Hemmteil sich verformt, weshalb dieses idealerweise ebenfalls aus einem elastische Eigenschaften aufweisenden Material besteht.

Das Hemmteil kann beispielsweise an der inneren Mantelfläche des ersten, äußeren Lagerteiles ausgebildet sein, das mit wenigstens einer sickenartigen Vertiefung auf der äußeren Mantelfläche des zweiten Lagerteiles in bestimmten Verstellpositionen formschlüssig korrespondiert. Zu den Vertiefungen an insbesondere der äußeren Mantelfläche des zweiten Lagerteiles nimmt das Hemmteil eine Vorzugsposition bzw. -stellung ein, welche insbesondere Endlagenstellungen des sich in der Waagerechte oder Senkrechten befindlichen Sitzkissens und gleichzeitig des zweiten, drehbeweglichen Lagerteiles sind. Das Hemmteil an der inneren Mantelfläche des ersten Lagerteiles ist beispielsweise als verformbare Materialverdickung oder Wulst ausgebildet. Die Verdickung wird bei einer Verdrehbewegung entweder des inneren, zweiten Lagerteiles oder des äußeren, ersten Lagerteiles erst durch Aufbringen einer entsprechend hohen Verstellkraft auf das drehbar gelagerte Lagerteil aus der zugeordneten Vertiefung bewegt. Dabei erfährt das Hemmteil eine Verformungsarbeit bzw. wird stark zwischen den Gleitflächen der Lagerteile zusammengepresst, bis die andere Endlagenstellung beispielsweise in Form einer Vertiefung am zweiten Lagerteil erreicht ist, in der sich das Hemmteil wieder ausdehnen kann. Bevorzugt ist das Hemmteil an der inneren Mantelfläche des die Gleitfläche des ersten Lagerteiles ausbildenden Hülsenteiles vorgesehen, was die Ausgestaltung des Hemmteiles an unmittelbar einer Gleitfläche mit Vorteil vereinfacht.

Alternativ ist vorgesehen, dass das Hemmteil an der äußeren Mantelfläche des zweiten, inneren Lagerteiles ausgebildet ist, wobei das Hemmteil wenigstens in einem Durchbruch an einer der Lagerschalen nach außen hin vorsteht, wobei der Durchbruch durch mindestens ein vom Hemmteil zu passierendes Gegenstück in vorgegebene Stellpositionen bestimmende Bereiche unterteilt ist. Das Hemmteil kann bei dieser Ausführungsform einteilig mit der äußeren Mantelfläche des zweiten Lagerteiles ausgebildet sein, wodurch das Hemmteil eine vorteilhaft feste Verbindung mit dem zweiten, inneren Lagerteil aufweist. In diesem Fall kann das vom Hemmteil zu passierende Gegenstück, welches an einer der Lagerschalen des ersten Lagerteiles im Bereich des Durchbruches angeordnet ist, in Form einer verformbaren Feder ausgebildet sein. Es ist ebenso denkbar, das Hemmteil wiederum als flexibles Kunststoff- oder Gummiteil auszubilden, welches an der äußeren Mantelfläche des zweiten Lagerteiles angeformt bzw. mit dieser verbunden ist. Das zu passierende Gegenstück kann in diesem Zusammenhang ein starrer Materialsteg oder -abschnitt der jeweiligen Lagerschale sein.

Das erste Lagerteil ist vorzugsweise eine zweiteilige Aufnahmebuchse und das zweite Teil ist als ein in der Aufnahmebuchse drehbar gelagerter Rohrkörper ausgebildet. Mit der erfindungsgemäßen Ausgestaltung der Lagerteile ist eine konstruktiv einfache Ausgestaltung gewährleistet, mit deren Hilfe zudem eine vorteilhafte Verstellmöglichkeit für das möglicherweise direkt mit dem Rohrkörper verbundene, beweglich gehaltene Bauteil, wie zum Beispiel ein Sitzkissen eines Fahrzeugsitzes, gegeben ist. Die zweiteilige Aufnahmebuchse kann dabei ein fester Bestandteil der Fahrzeugkarosserie bzw. des Fahrzeugsitzes sein. Es ist ebenso denkbar, das zweite, als Rohrkörper vorliegende, innere Lagerteil feststehend auszubilden bzw. starr mit Teilen der Karosserie zu verbinden, womit das erste, äußere Lagerteil drehbeweglich aufgenommen ist. Diesbezüglich sind dann die Lagerschalen der Lagerbuchse direkt an dem zu bewegenden Bauteil, insbesondere dem Sitzkissen eines Rücksitzes, ausgebildet.

Bei einem Sitz, insbesondere einem Fahrzeugsitz mit zumindest einem beweglich gehaltenen Sitzabschnitt, wie einem Sitzkissen oder dergleichen, welcher mittels wenigstens einem Drehgelenk schwenkbeweglich gehalten ist, für den selbstständiger Schutz beantragt wird, ist erfindungsgemäß vorgesehen, dass das Drehgelenk ein Drehgelenk nach einem der Ansprüche 1 bis 9 ist.

Der Einsatz eines solch erfindungsgemäßen Drehgelenkes hat den Vorteil, dass der beweglich gehaltene Sitzabschnitt in seiner Lagerung bevorzugt spielfrei aufgenommen ist, so dass Vibrationen im Drehlager und daraus resultierende Geräusche vermindert oder bestenfalls vermieden sind. Des Weiteren ist insbesondere bei Schlecht-Wegfahrten eine ungewollte Bewegung eines beispielsweise in die Senkrechte umgelegten Sitzkissens eines Sitzes durch die mittels des Drehgelenkes erfolgende Arretierung zumindest auf ein Minimum beschränkt.

Ausführungsbeispiele der Erfindung, aus denen sich weitere erfinderische Merkmale ergeben, sind in der Zeichnung dargestellt. Es zeigen:
- Fig.1:: eine schematische Ansicht eines Fahrzeuges mit Fahrersitz, Beifahrersitz und Rücksitz;
- Fig. 2:: eine Ansicht eines um ein erfindungsgemäß aus-gebildetes Drehgelenk schwenkbar aufgenommenen Bauteils;
- Fig. 3:: eine vergrößerte Ansicht des Drehgelenks nach Fig. 2 im Schnitt quer zur Drehachse;
- Fig. 4:: eine Schnittdarstellung des Drehgelenks in dessen Drehachse;
- Fig. 5:: eine perspektivische Ansicht eines weiteren Ausführungsbeispiels eines erfindungsgemäßen Drehgelenks, und
- Fig. 6:: eine Darstellung des Drehgelenks nach Fig. 5 im Schnitt quer zur Rotationsachse des Drehgelenks.

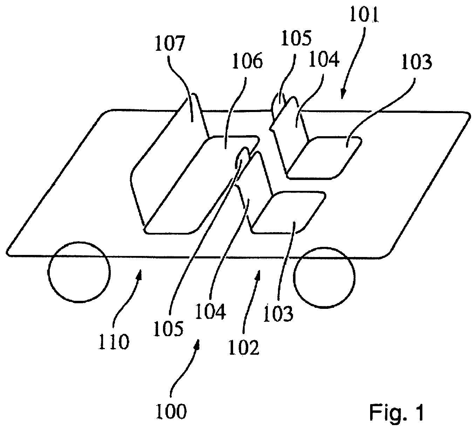

In Fig. 1 ist ein Fahrzeug 100 schematisch dargestellt. Dieses weist einen Fahrersitz 101, einen Beifahrersitz 102 und eine Rücksitzbank 110 auf. Die vorderen Sitze weisen Sitzkissen 103, Rückenlehnen 104 und Kopflehnen 105 auf und die Rücksitzbank weist ein Sitzkissen 106 und eine Rückenlehne 107 auf. Der Winkel zwischen Sitzfläche 103 und Rückenlehne 104 ist typischerweise verstellbar. Das im Folgenden weiter beschriebene Drehgelenk ist insbesondere zur Verstellung des Winkels zwischen dem Sitzkissen 106 und dem Fahrzeug 100 geeignet.

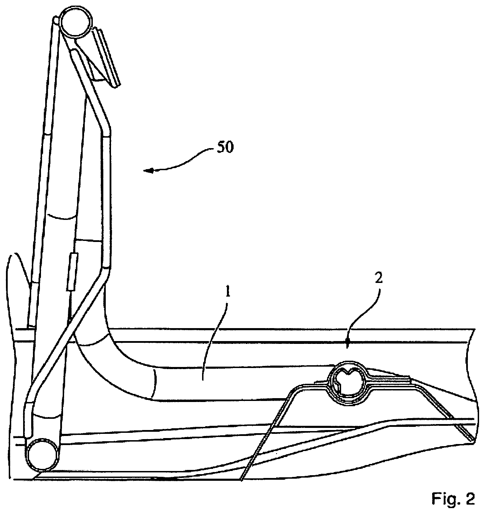

Mit 1 ist in Fig. 2 ein Bauteil bezeichnet, das an einem seiner Enden über ein Drehgelenk 2 schwenkbeweglich aufgenommen ist. Das schwenkbare Bauteil 1 ist Teil einer Rahmenkonstruktion 50 eines in Fig. 1 dargestellten Sitzkissens 106 einer Rücksitzbank 110, welches im Bedarfsfall zwischen wenigstens zwei Verstell-positionen hin- und herverschwenkt werden kann.

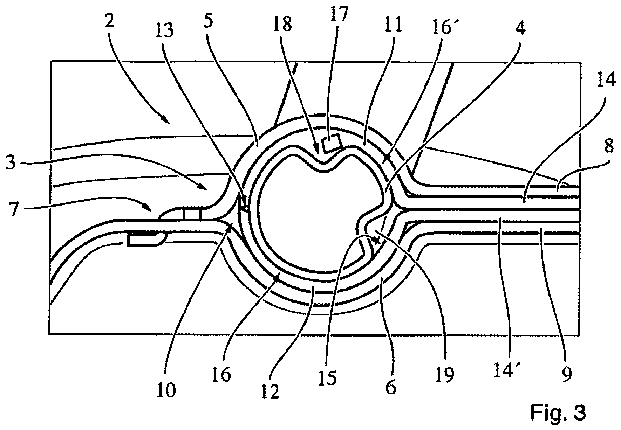

In Fig. 3 ist eine vergrößerte Ansicht des im Schnitt dargestellten ersten Ausführungsbeispiels eines Drehgelenkes 2 dargestellt. Das Drehgelenk 2 ist zumindest aus einem ersten, äußeren Lagerteil 3 und einem zweiten, inneren Lagerteil 4 ausgebildet. Das erste Lagerteil 3 weist zwei Lagerschalen 5, 6 auf, die auf einer Seite mittels eines scharnierartigen Verbindungsbereiches 7 miteinander gekoppelt sind und auf der entgegengesetzten Seite mit zwei Auflageschenkeln 8, 9 ausgerüstet sind, welche über eine nicht dargestellte Schraubverbindung miteinander verbunden sind. Mit Hilfe der Auflageschenkel 8, 9 können die Halbschalen 5, 6 zusammengezogen und die Anpresskraft der Lagerteile zueinander erhöht werden. Zwischen dem ersten und zweiten Lagerteil 3, 4 ist ein Hülsenteil 10 für eine Erhöhung der Anpresskraft zwischen den Lagerteilen 3, 4 aus zwei vorgeformten Hülsenhälften 11, 12 angeordnet. Die Hülsenhälften 11, 12 sind über ein Filmscharnier 13 miteinander verbunden und weisen an ihren gegenüberliegenden Längsseiten zwei Halteschenkel 14, 14' auf, die zwischen den Auflageschenkeln 8, 9 des ersten Lagerteiles 3 geklemmt sind. Somit ist das Hülsenteil 10 drehfest zwischen den Lagerschalen 5, 6 gehalten und bildet insbesondere die Gleitfläche 15 für die Gleitfläche 16 des zweiten Lagerteiles 4 aus. An der Gleitfläche 15 des Hülsenteiles 10 ist des Weiteren eine als Hemmteil 17 ausgebildete Materialverdickung bzw. -wulst vorgesehen, die mit einer jeweiligen, nutartigen Vertiefung 18, 19 an der äußeren Mantelfläche des zweiten Lagerteils 4 korrespondiert.

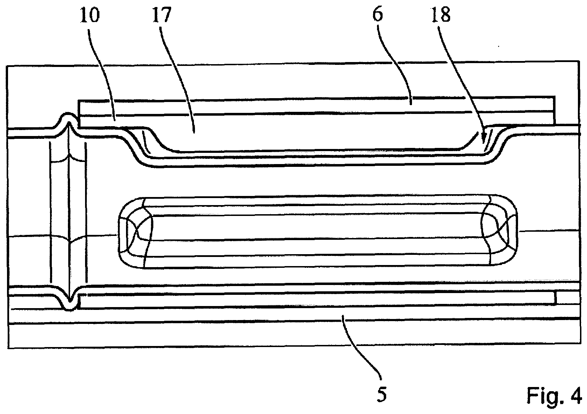

In Fig. 4 ist eine Schnittdarstellung des Drehgelenkes 2 parallel zu dessen Rotationsachse gezeigt, welche den Aufbau des Drehgelenks 2 weiter verdeutlicht. Das Hemmteil 17 erstreckt sich dabei über einen vorbestimmten Abschnitt parallel zur Längsachse des Hülsenteiles 10, wodurch stets eine vorteilhaft sichere Arretierung des zweiten Lagerteiles 4 und somit des schwenkbaren Bauteiles 1 in einer jeweiligen Verstellposition gewährleistet ist. Für das Verdrehen des zweiten Lagerteiles 4 ist eine vorbestimmte Verstellkraft notwendig, wobei das Hemmteil 17 dann aus der Vertiefung 18 herausbewegt wird und gleichzeitig durch den die ursprünglichen Abmessungen des Lagerteiles 4 aufweisenden Gleitflächenabschnitt 16' (Fig. 3) gestaucht bzw. zusammengedrückt wird, bis das Bauteil 1 soweit verstellt ist, dass sich das Hemmteil 17 in der anderen Vertiefung 19 wieder entformen kann.

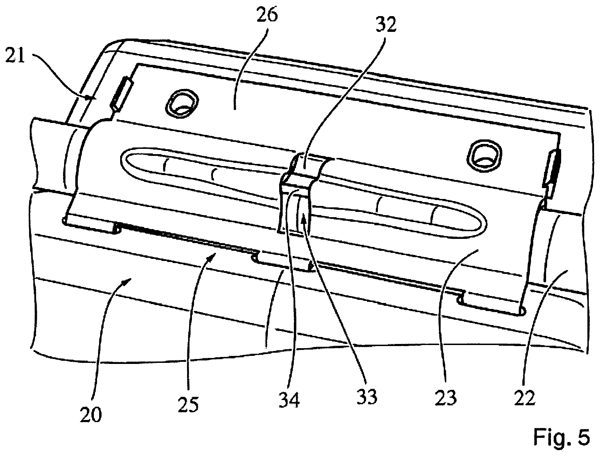

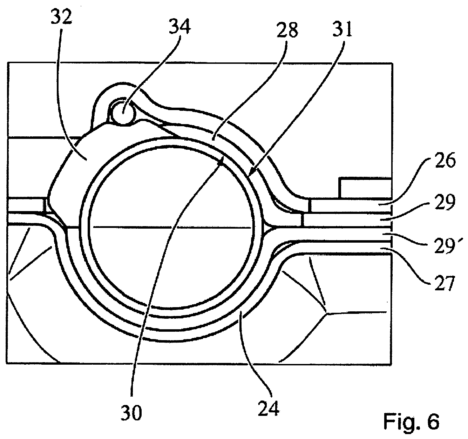

In den Figuren 5 und 6 ist eine weitere alternative Ausführungsform eines erfindungsgemäßen Drehgelenkes 20 dargestellt, das ebenfalls zwei drehbeweglich zueinander gehaltene Lagerteile 21, 22 aufweist. Das Lagerteil 21 weist wiederum zwei Lagerschalen 23, 24 auf, die ähnlich wie in der ersten Ausführungs-form auf einer Seite über einen scharnierartigen Verbindungsbereich 25 und am entgegengesetzten Ende mittels zweier Auflageschenkel 26, 27, welche über nicht näher dargestellte Schraubverbindungen miteinander verbunden sind, in einem vorbestimmten Abstand zueinander gehalten werden. An der Innenseite der Lager-schalen 23, 24 ist wiederum ein Hülsenteil 28 vorgesehen. Das Hülsenteil 28 kann in ähnlicher zu der in Fig. 3 und Fig. 4 beschriebenen Form zwei nicht näher gezeigte Hülsenhälften aufweisen, die mit ihren Halteschenkeln 29, 29' zwischen den Lagerschalen 23, 24 drehfest geklemmt werden. Durch das Hülsenteil 28 ist wiederum eine erhöhte Spannung bzw. Anpresskraft zwischen den Gleitflächen 30, 31 erzeugt, so dass das als Rohrstück ausgebildete Lagerteil 22 nur mit einer erhöhten Kraft verdreht werden kann. In diesem Ausführungsbeispiel ist das Hemmteil 32 unmittelbar an der äußeren Mantelfläche des Lagerteiles 22 nach außen vorstehend angeordnet, wobei das Hemmteil 32 in einen Durchbruch 33 an der Lagerschale 23 vorsteht. Der Durchbruch 33 ist insbesondere mit einem vom Hemmteil 32 zu passierenden Gegenstück 34 versehen, das den Durchbruch in mindestens zwei den Verstellpositionen zugeordnete Bereiche unterteilt. Das beispielsweise als teilweise verformbares Federelement ausgebildete Gegenstück 34 arretiert das Hemmteil 32 bis zu einer beispielsweise voreinstellbaren Maximalkraft in der Verstellposition. Steigt die am drehbaren Lagerteil und somit am Hemmteil angreifende Kraft über diesen entsprechenden Maximalwert, wird eine Drehung innerhalb des Drehgelenkes 20 initiiert und das drehbare Lagerteil 22 bis in die andere Verstellposition verdreht.

## Patentansprüche

1. Drehgelenk für ein beweglich gehaltenes Bauteil, insbesondere für ein Sitzkissen eines Fahrzeugsitzes, mit zumindest zwei zueinander drehbeweglich gehaltenen Lagerteilen, die einander zugewandte Gleitflächen aufweisen,
**dadurch gekennzeichnet,**
**dass** ein erstes Lagerteil (3, 21) wenigstens zwei zueinander im Abstand veränderliche (5, 6, 23, 24) Lagerschalen aufweist, mittels denen das zweite Lagerteil (4, 22) wenigstens teilweise an seinem Umfang umschlossen ist, und dass wenigstens einem der Lagerteile (3, 4, 21, 22) zumindest ein Mittel zur Erhöhung der Anpresskraft zwischen den Gleitflächen (15, 16, 30, 31) der Lagerschalen (5, 6, 23, 24) und des zweiten Lagerteiles (4, 22) zugeordnet ist.

2. Drehgelenk nach Anspruch 1, **dadurch gekennzeichnet, dass** wenigstens Flächenteile einer der Gleitflächen (15, 16, 30, 31) des ersten oder zweiten Lagerteiles (3, 4, 21, 22) aus einem separaten Hülsenteil (10, 28) mit auf die Abmessungen der Lagerteile (3, 4, 21, 22) abgestimmten Innen- und Außendurchmesser ausgebildet ist.

3. Drehgelenk nach Anspruch 2, **dadurch gekennzeichnet, dass** das Hülsenteil (10) aus zwei vorgeformten Hülsenhälften (11, 12) ausgebildet ist.

4. Drehgelenk nach Anspruch 3, **dadurch gekennzeichnet, dass** die Hülsenhälften (11, 12) über einen scharnierartigen Verbindungsbereich miteinander verbunden sind.

5. Drehgelenk nach einem der Ansprüche 2 bis 4, **dadurch gekennzeichnet, dass** der Werkstoff für das Hülsenteil (10, 28) aus einem elastische Eigenschaften aufweisenden Material ausgebildet ist.

6. Drehgelenk nach einem der Ansprüche 1 bis 5, **dadurch gekennzeichnet, dass** an einer der Gleitflächen (15, 16, 30, 31) des ersten oder zweiten Lagerteiles (3, 4, 21, 22) ein Hemmteil (17, 32) vorstehend ausgebildet ist, welches in Anlage mit Flächenbereichen der Gleitfläche (15, 16, 30, 31) des jeweils anderen Lagerteiles (3, 4, 21, 22) steht.

7. Drehgelenk nach Anspruch 6, **dadurch gekennzeichnet, dass** das Hemmteil (17) an der inneren Mantelfläche des ersten Lagerteiles (3) ausgebildet ist, das mit wenigstens einer sickenartigen Vertiefung (18, 19) auf der äußeren Mantelfläche des zweiten Lagerteiles (4) in bestimmten Verstellpositionen formschlüssig korrespondiert.

8. Drehgelenk nach Anspruch 6, **dadurch gekennzeichnet, dass** das Hemmteil (32) an der äußeren Mantelfläche des zweiten Lagerteiles (22) ausgebildet ist, wobei das Hemmteil (32) wenigstens in einem Durchbruch (33) an einer der Lagerschalen (23, 24) vorsteht, wobei der Durchbruch (33) durch mindestens ein vom Hemmteil (32) zu passierendes Gegenstück (34) in vorgegebene Stellpositionen bestimmende Bereiche unterteilt ist.

9. Drehgelenk nach einem der Ansprüche 1 bis 8, **dadurch gekennzeichnet, dass** das erste Lagerteil (3, 21) eine zweiteilige Aufnahmebuchse ist und das zweite Lagerteil (4, 22) als ein in der Aufnahmebuchse drehbar gehaltener Rohrkörper ausgebildet ist.

10. Sitz, insbesondere Fahrzeugsitz, mit zumindest einem beweglich gehaltenen Sitzabschnitt, wie Sitzkissen oder dergleichen, welcher mittels wenigs¬tens einem Drehgelenk schwenkbeweglich gehalten ist,
**dadurch gekennzeichnet,**
**dass** das Drehgelenk (2, 20) ein Drehgelenk nach einem der Ansprüche 1 bis 9 ist.

## Claims

1. Rotary joint for a movable mounted component, in particular for a cushion of a vehicle seat, with at least two bearing parts that are mounted so as to be rotatable with respect to each other, and sliding surfaces of which face each other,
**characterized in that**
a first bearing part (3, 21) has at least two bearing shells (5, 6, 23, 24), the separation between which is variable, and by which at least part of the periphery of the second bearing part (4, 22) is surrounded, and that at least one means for increasing the contact pressure between the sliding surfaces (15, 16, 30, 31) of the bearing shells (5, 6, 23, 24) and the second bearing part (4, 22) is assigned to at least one of the bearing parts (3, 4, 21, 22).

2. Rotary joint according to claim 1, **characterized in that** at least surface portions of one of the sliding surfaces (15, 16, 30, 31) of the first or second bearing part (3, 4, 21, 22) is formed by a separate sleeve member (10, 28) with an interior and exterior diameter whose dimensions are matched with the bearing parts (3, 4, 21, 22).

3. Rotary joint according to claim 2, **characterized in that** the sleeve member (10) consists of two preformed sleeve halves (11, 12).

4. Rotary joint according to claim 3, **characterized in that** the sleeve halves (11, 12) are connected to one another via a hinge-like connecting area.

5. Rotary joint according to any one of claims 2 to 4,
**characterized in that** the material for the sleeve member (10, 28) is made from a material having elastic properties.

6. Rotary joint according to any one of claims 1 to 5,
**characterized in that** an inhibiting part (17, 32) is conformed in protruding manner on one of the sliding surfaces (15, 16, 30, 31) of the first or second bearing part (3, 4, 21, 22), which inhibiting part bears flat on surface areas of the sliding surface (15, 16, 30, 31) of the corresponding other bearing part (3, 4, 21, 22).

7. Rotary joint according to claim 6, **characterized in that** the inhibiting part (17) is conformed on the inner circumferential surface of the first bearing part (3), which corresponds in positive locking manner with at least one bead-like depression (18, 19) on the outer circumferential surface of the second bearing part (4) in certain adjustment positions.

8. Rotary joint according to claim 6, **characterized in that** the inhibiting part (32) is conformed on the outer circumferential surface of the second bearing part (22), wherein the inhibiting part (32) protrudes into at least one opening (33) on one of the bearing shells (23, 24), wherein the opening (33) is divided into areas which define predetermined adjustment positions by at least one matching part (34) over which the inhibiting part (32) must pass.

9. Rotary joint according to any one of claims 1 to 8,
**characterized in that** the first bearing part (3, 21) is a two-part receiving socket and the second bearing part (4, 22) is designed as a tubular body mounted rotatably in the receiving socket.

10. Seat, particular a vehicle seat, having at least one movably mounted seat section, such as a seat cushion or the like, which is mounted in pivotable manner by means of at least one rotary joint,
**characterized in that**
the rotary joint (2, 20) is a rotary joint according to any one of claims 1 to 9.

## Revendications

1. Joint articulé pour un élément maintenu de façon mobile, en particulier pour un coussin de siège d'un siège de véhicule, avec au moins deux éléments de palier maintenus mobiles en rotation l'un par rapport à l'autre, lesquels présentent des surfaces de glissement se faisant face,
**caractérisé en ce que**
un premier élément de palier (3, 21) présente au moins deux coussinets de palier (5, 6, 23, 24) variables l'un par rapport à l'autre concernant la distance, à l'aide desquels le deuxième élément de palier (4, 22) est entouré au moins en partie sur sa périphérie, et **en ce que** l'on associe à au moins l'un des éléments de palier (3, 4, 21, 22) au moins un moyen pour l'augmentation de la force de serrage entre les surfaces de glissement (15, 16, 30, 31) des coussinets de palier (5, 6, 23, 24) et du deuxième élément de palier (4, 22).

2. Joint articulé selon la revendication 1, **caractérisé en ce qu'**au moins des parties de surface de l'une des surfaces de glissement (15, 16, 30, 31) du premier ou deuxième élément de palier (3, 4, 21, 22) sont réalisées en un élément de manchon (10, 28) séparé avec un diamètre intérieur et extérieur adapté aux dimensions des éléments de palier (3, 4, 21, 22).

3. Joint articulé selon la revendication 2, **caractérisé en ce que** l'élément de manchon (10) est formé par deux moitiés de manchon (11, 12) préformées.

4. Joint articulé selon la revendication 3, **caractérisé en ce que** les moitiés de manchon (11, 12) sont reliées ensemble via une zone de liaison semblable à une charnière.

5. Joint articulé selon l'une des revendications 2 à 4,
**caractérisé en ce que** la matière première pour l'élément de manchon (10, 28) est formée par un matériau présentant des propriétés élastiques.

6. Joint articulé selon l'une des revendications 1 à 5,
**caractérisé en ce que**, au niveau de l'une des surfaces de glissement (15, 16, 30, 31) du premier ou deuxième élément de palier (3, 4, 21, 22), un élément de blocage (17, 32) est réalisé en saillie, lequel est en butée avec des zones de surface de la surface de glissement (15, 16, 30, 31) de l'autre élément de palier (3, 4, 21, 22) respectif.

7. Joint articulé selon la revendication 6, **caractérisé en ce que** l'élément de blocage (17) est réalisé au niveau de la surface d'enveloppe interne du premier élément de palier (3), lequel correspond par conjugaison de formes à au moins un creux (18, 19) semblable à une moulure sur la surface d'enveloppe externe du deuxième élément de palier (4) dans des positions de réglage définies.

8. Joint articulé selon la revendication 6, **caractérisé en ce que** l'élément de blocage (32) est réalisé sur la surface d'enveloppe externe du deuxième élément de palier (22), dans lequel l'élément de blocage (32) est en saillie au moins dans une percée (33) au niveau de l'un des coussinets de palier (23, 24), dans lequel la percée (33) est subdivisée en zones déterminant des positions de réglage définies par au moins une contrepartie (34) par laquelle l'élément de blocage (32) doit passer.

9. Joint articulé selon l'une des revendications 1 à 8,
**caractérisé en ce que** le premier élément de palier (3, 21) est une douille de logement en deux parties et **en ce que** le deuxième élément de palier (4, 22) est réalisé en tant que corps tubulaire maintenu de façon rotative dans la douille de logement.

10. Siège, en particulier siège de véhicule, avec au moins une partie d'assise, telle un coussin de siège ou similaire, lequel est maintenu de façon mobile en pivotement à l'aide d'au moins un joint articulé,
**caractérisé en ce que**
le joint articulé (2, 20) est un joint articulé selon l'une des revendications 1 à 9.
